**Europäisches Patentamt**

**European Patent Office**

**Office européen des brevets**

(11) Publication number: **0 274 993**
**B1**

(12) **EUROPEAN PATENT SPECIFICATION**

(45) Date of publication of patent specification: **06.02.91**

(21) Application number: **87830418.7**

(22) Date of filing: **24.11.87**

(51) Int. Cl.⁵: **B 62 D 25/08**

(54) Front body module for a motor car, a front modular sub-assembly for a motor car using this front module, and a method for assembling a motor vehicle with the use of this modular sub-assembly.

(30) Priority: **16.12.86 IT 6793386**

(43) Date of publication of application:
**20.07.88 Bulletin 88/29**

(45) Publication of the grant of the patent:
**06.02.91 Bulletin 91/06**

(84) Designated Contracting States:
**DE ES FR GB SE**

(56) References cited:
**DE-A-2 035 113**
**FR-A-2 271 105**
**FR-A-2 546 838**
**US-A-2 654 634**
**US-A-2 662 794**
**US-A-3 044 822**
**US-A-4 542 934**

(73) Proprietor: **FIAT AUTO S.p.A.**
**Corso Giovanni Agnelli 200**
**I-10135 Torino (IT)**

(72) Inventor: **Cornacchia, Felice**
**Corso Giovanni Agnelli 24**
**I-10137 Torino (IT)**
Inventor: **Bruno, Andreino**
**Via Sapri 54/34**
**I-10127 Torino (IT)**
Inventor: **Ghione, Stefano**
**Via Principi di Carignano 37**
**I-10041 Torino (IT)**

(74) Representative: **Buzzi, Franco et al**
**c/o Jacobacci-Casetta & Perani S.p.A. Via Alfieri, 17**
**I-10121 Torino (IT)**

Courier Press, Leamington Spa, England.

## Description

The present invention relates in general to the manufacture of motor cars by means of sub-assemblies, that is, preassembled parts.

More particularly, the invention concerns a front body module which forms part of a chassis arranged to form a front modular sub-assembly with preassembled mehanical members, intended to be used subsequently for the full assembly of the car.

In the manufacture of motor cars by the technology indicated above, front body modules which are used at present to act as part of the chassis are constituted in some cases by a simple cross member for the attachment of the suspension arms for the front wheels and for the fixing of the steering box.

Known is in the art, from DE—A—2035113, a front body module forming a part of a chassis for a motor car, comprising two side panel members each including a front wheel arch structure and an intermediate hollow domed structure with its cavity opened outwardly. Such known body module is simply intended to constitute a front luggage trunk.

Other known front body modules comprise a quadrilateral structure on which the suspension arms, the steering box, the engine and the radiator for the coolant liquid are fitted.

Such solutions do not enable the complete preassembly of the suspension members, particularly the upper ends of tyhe MacPherson struts, and entail the support of the power unit from beneath (supported engine).

Another disadvantage of the modules used at present lies in the fact that they involve the use of various elements, some of which serve only the housing function necessary to give the module the required structural strength.

Another disadvantage of the known modular body structures lies in the fact that, after their joining to the other components of the body, they require completion and assembly operations on an assembly line, such as, for example, the fixing of tops of the suspension struts and the installation of accessories of the power unit.

The object of the present invention is to avoid these disadvantages and to provide a front body module forming a part of a chassis for a motor car, which on the one hand has an essential structure constituted by a number of components reduced by the exclusion of auxiliary members having solely a housing function, and on the other hand allows the complete preassembly of the engine and the front suspension with their accessories before the final connection to the car body.

In order to achieve this object, the invention provides a front body module forming a part of a chassis for a motor car, having the features set forth in the characterising part of claim 1.

By virtue of this solution, the body module according to the invention is constituted solely by essential members which, as well as having a function of supporting and housing the various front mechanical systems of the car, at the same time also fulfil the necessary structural requirements and aerodynamic requirements of the structure.

Furthermore, the presence of the domed structure enables the complete preassembly of the complete front suspension (as well as the engine with its accessories such as the battery, the radiator, etc.) before the connection of the module to the remaining part of the car body. The preassembly of these components may be carried out in a totally automated manner, particularly by virtue of the possibility of bringing together and assembling the suspension struts (spring-shock absorbers) with their swing arms and the front wheel axles through the open cavities in the domed structures, and of subsequently connecting the axles to the engine already assembled within the module.

The domed structures are conveniently arranged to receive a pair of upper attachment plates preconnected to the suspension struts and arranged to be fixed in the form of caps to the tops of the domed structure.

In addition to the possibility of the complete preassembly of the components of the engine space, the module according to the invention enables any differences of track and mechanical anchorages envisaged for different models of motor car to be accommodated easily without positioning compromises which would have a harmful effect on the vibrational and acoustic comfort for these vehicles.

A further subject of the invention is a front modular sub-assembly for a motor car, characterised in that it comprises a front body module of the type defined previously, on which all the engine, suspension and steering members for the front wheels of the car, with their accessories, are preassembled.

According to another aspect of the invention, this modular sub-assembly is used in a method of assembly of a front-wheel drive motor car, characterised in that it incudes the steps of:

preassembling a front modular sub-assembly;

preassembling a rear sub-assembly provided with a pair of forwardly-projecting upper attachment brackets and lower attachment parts, and

mechanically interconnecting the upper attachment parts and the rear attachment appendages of the front modular sub-assembly and the attachment brackets and the lower attachment parts of the rear sub-assembly, respectively.

The invention will now be described in detail with reference to the appended drawings, provided purely by way of non-limiting example, in which:

Figure 1 is a schematic perspective view of a front body module according to the invention,

Figure 2 is an exploded perspective view of Figure 1,

Figure 3 is a perspective view of a detail of Figure 1,

Figure 4 is a perspective view of another detail of Figure 1,

Figure 5 is a schematic cross-section taken on the line V—V of Figure 1, on an enlarged scale,

Figure 6 is a schematic perspective view of a front modular sub-assembly for a motor car using the body module of Figures 1 to 5,

Figure 7 is an exploded perspective view of Figure 6, and

Figure 8 is a schematic exploded perspective view of a motor car body formed with the use of the front modular sub-assembly of Figures 6 and 7.

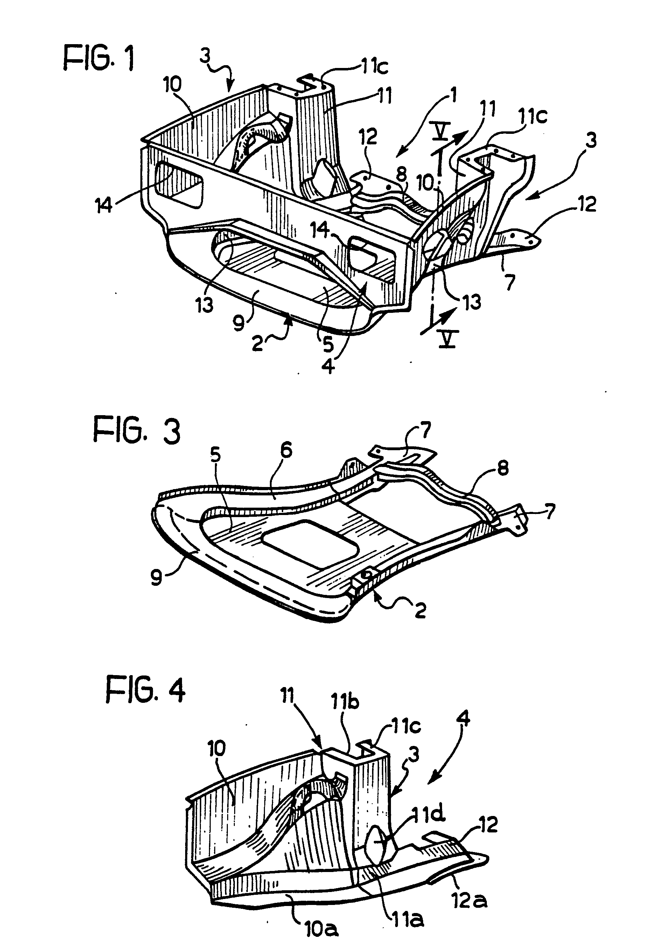

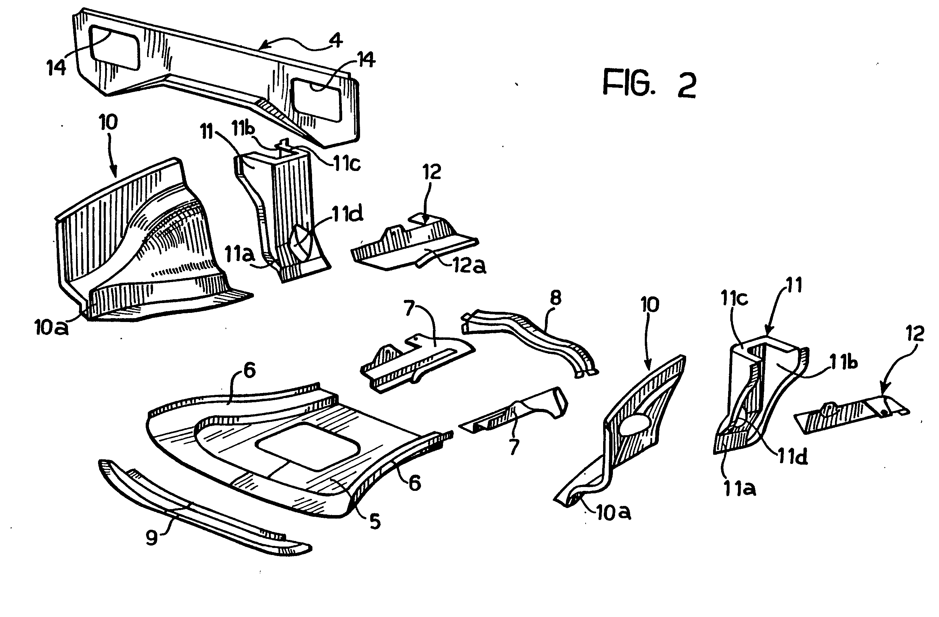

With reference initially to Figures 1 to 4, a front body module according to the invention, which functions as a chassis for a motor car, is generally indicated 1.

The front module 1 comprises essentially a substantially bowl-shaped base member 2, two side panel members 3 fixed to the side of the base member 2, and a front cross member 4.

The base member 2, illustrated separately in Figure 3, comprises a base plate 5 which is closed or partially open, as in the embodiment illustrated, and has shaped lateral raised edges 6 extending rearwardly beyond the plate 5 to form two rear attachment appendages 7. These attachment appendages 7 are interconnected by a box cross member 8 and a profiled member 9 is fixed to the front part of the plate 5 to form a box structure with this front part of the plate 5.

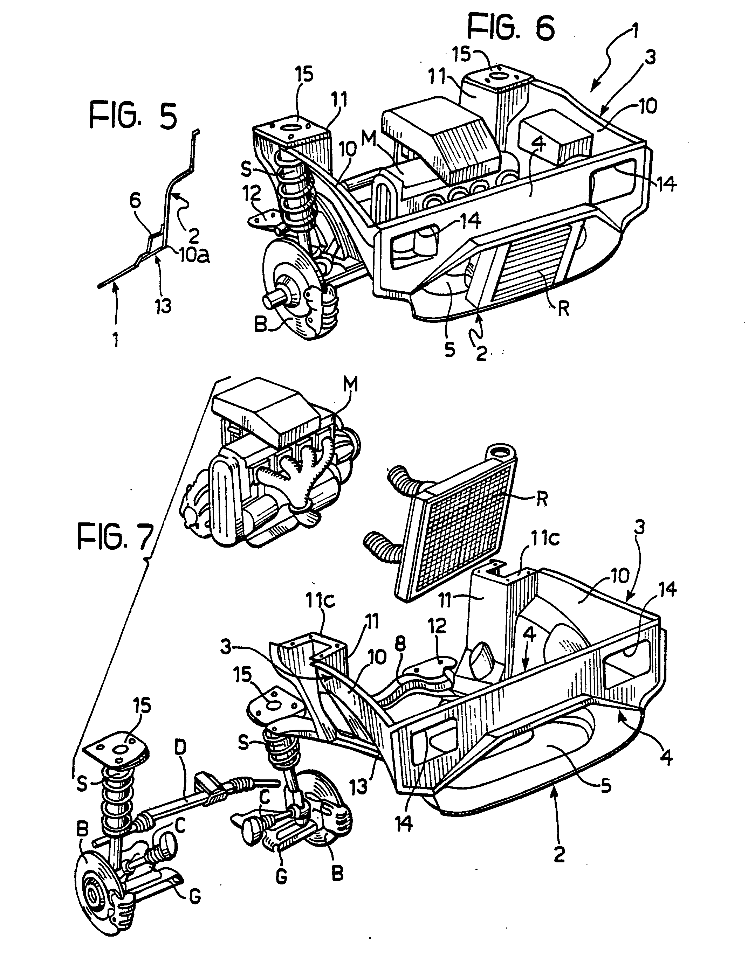

Each of the two side panel members 3, one of which is illustrated, separately in Figure 4, comprises a front wheel arch structure 10, an intermediate hollow domed structure 11 joined along its front edge to the wheel arch structure 10, and a rear attachment appendage 12 joined to the base of the domed structure 11 on its side opposite the wheel arch structure 10. These three members have respective lower edges 10a, 11a, 12a joined to the base member 2 in correspondence with a respective lateral edge 6 thereof and having a shape, illustrated schematically in Figure 5, such as to define, with this lateral edge 6 and with the corresponding rear attachment appendage 7, a lateral box structure connected to the front box part 9 of the base member 2.

Each intermediate domed structure 11 has a generally channelled profile with its cavity 11b open outwardly and upwardly. The top of the domed structure 11 has a horizontal coupling flange 11c the function of which will be explained below. Moreover, an aperture 11d is formed close to the lower side 11a, also for reasons which will be explained below.

The front cross member 4 is constituted by a plate whose ends are joined to the front sides of the wheel arch structures 10 of the two side panel members 3, above the front box part 9 of the base member 2. Adjacent the ends of the cross member 4 are apertures 14 for housing the front lights of the car.

The body module 1 as described above is arranged for the completely automated preassembly of the various front mechanical members of the motor car, so as to constitute a front modular sub-assembly of the motor car indicated 16 in Figure 6.

In the case of a front-wheel drive vehicle, corresponding to the embodiment illustrated, these mechanical members, illustrated schematically in Figures 6 and 7, include the engine M with the cooling radiator R for the coolant liquid, the MacPherson suspension struts S for the front wheels with their arms G, axles C and brake units B, as well as the steering control unit D for the wheels and the battery E. These members are preassembled in the body module 1 in the manner illustrated in Figure 6, with the use of the components described previously for their attachment and support in a convenient and easy manner. More particularly, the conformation of the two domed structures 11 allows the MacPherson struts S to be fitted easily, even as regards the tops of these struts, by means of travel limit plates 15 arranged to be fixed in the form of caps to the top flanges 11c of the domed structures 11. The apertures 11d in the domed structures 11 enable the passage of the axles C and their convenient connection to the engine M.

In the assembled condition illustrated in Figure 6, the plates 15 define two attachments useable for the connection of the modular sub-assembly 16, constituted, as stated, by the front module 1 and the preassembled mechanical members, to the remaining part of the vehicle body.

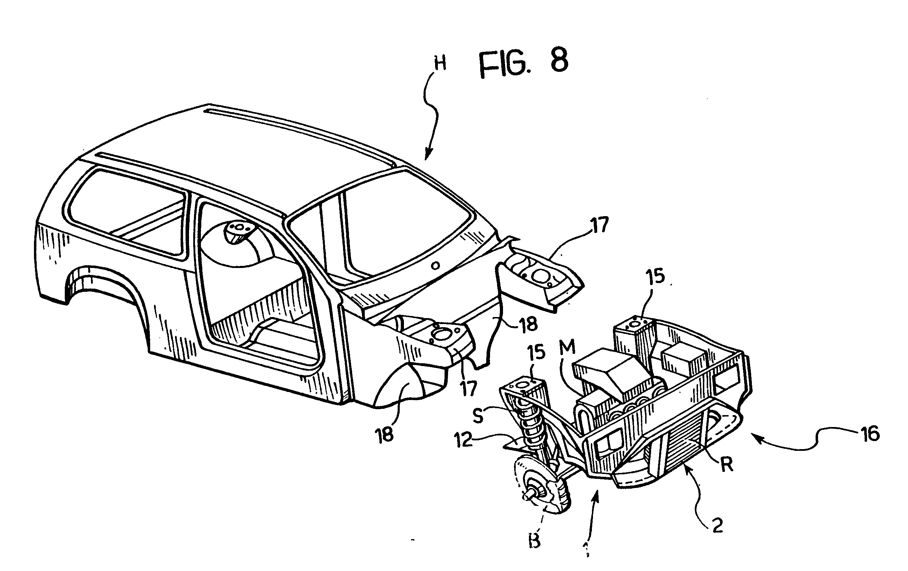

This body part is generally indicated H in Figure 8 and, according to the invention, has a pair of forwardly-projecting upper attachment brackets 17 and lower attachment parts 18, arranged for mechanical interconnection with the upper attachment parts 15 and the lower attachment parts 7—12 of the front sub-asembly 16, respectively. By virtue of the conformation of the sub-assembly 16 and particularly of the body module 1 which constitutes its frame, and as a result of the assembly of the body sub-assembly H, further completion and fixing operations for the front mechanical members are avoided on the assembly line since, as stated previously, they are already completely preassembled.

**Claims**

1. Front body module (1) forming a part of a chassis for a motor car, including two side panel members (3) each including a front wheel arch structure (10), an intermediate hollow domed structure (11) with its cavity (11b) open outwardly, characterised in that it comprises:

a substantially bowl-shaped base member (2) having a front box part (9), raised lateral edges (6), and rear lateral attachment appendages (7),

a rear attachment appendage (12) of each side panel member (3), the said front and intermediate structures (10, 11) and the rear appendages (12) having lower edges (10a, 11a, 12a) coupled respectively to the raised lateral edges (6) and the rear lateral attachment appendages (7) of the base member (2) to define respective lateral box structures (13) connected to the front box part (9) of the base member (2),

a front cross member (4) which interconnects the front of the wheel arch structure (10) above the front box part (9) of the base member (2), and

a rear cross member (8) which interconnects the rear lateral attachment appendages (7) of the base member (2).

2. Module according to Claim 1, characterised in that it further includes a pair of upper attachment plates (15) adapted to be fixed in the form of caps to the tops (11c) of the domed structures (11).

3. Front modular sub-assembly for a motor car, characterised in that it includes a front body module (1) according to Claims 1 and 2, on which all the drive (M, C), suspension (S, G) and steering members (D) for the front wheels of the vehicle, and their accessories (R, B, E), are preassembled, and upper attachment plates (15) being mounted on the suspension members (S) before their assembly on the front body module (1).

4. Front-wheel drive motor car, characterised in that it includes a front modular sub-assembly (16) according to Claim 3 and a rear preassembled sub-assembly (H) which are interconnected mechanically by means of the rear attachment appendages (7, 12) and the upper attachment plates (15) of the front body module (1) of the front modular sub-assembly (16).

5. Method of assembly of a front-wheel drive motor car, characterised in that it includes the steps of:

preassembling a front modular sub-assembly (16) according to Claim 3,

preassembling a rear sub-assembly (H) provided with a pair of forwardly-projecting upper attachment brackets (17) and lower attachment parts (18), and

mechanically interconnecting the upper attachment plates (15) and the rear attachment appendages (7, 12) of the front modular sub-assembly (16) and the attachment brackets (17) and lower attachment parts (18) of the rear sub-assembly (H), respectively.

**Patentansprüche**

1. Vorderes Karosserie-Modul (1), das Bestandteil eines Kraftfahrzeug-Chassis ist,

mit zwei Seitenwandteilen (3) mit jeweils einer vorderen bogenförmigen Konstruktion (10) für eines der Vorderräder und einer hohlegewölbten Zwischenkonstruktion (11), deren Hohlseite (11b) nach außen offen ist, gekennzeichnet durch

ein im wesentlichen schalenförmiges Basisteil (2) mit einem vorderen Kastenteil (9), hochgezogenen Seitenkanten (6) und hinteren seitlichen Befestigungsansätzen (7),

einen hinteren Befestigungsansatz (12) an jedem Seitenwandteil (3), wobei die genannten vorderen und Zwischenkonstruktionen (10, 11) und die hinteren Befestigungsansätze (12) Unterkanten (10a, 11a, 12a) besitzen, die jeweils mit den hochgezogenen Seitenkanten (6) und den hinteren seitlichen Befestigungsansätzen (7) des Basisteils (2) verbunden sind und entsprechende seitliche Kastenkonstruktionen (13) bilden, die mit dem vorderen Kastenteil (9) des Basisteils (2) verbunden sind,

ein vorderes Querteil (4), das die Vorderseite der bogenförmigen Konstruktion (10) für die Räder über dem vorderen Kastenteil (9) des Basisteils (2) miteinander verbindet,

und ein hinteres Querteil (8), das die hinteren seitlichen Befestigungsansätze (7) des Basisteils (2) miteinander verbindet.

2. Model nach Anspruch 1, dadurch gekennzeichnet, daß es ferner zwei obere Befestigungsplatten (15) aufweist, die in Form von Kappen auf den Oberseiten (11c) der gewölbten Konstruktionen (11) befestigbar sind.

3. Modulare vordere Unterbaugruppe für ein Kraftfahrzeug, gekennzeichnet durch ein vorderes Karosseriemodul (1) nach Anspruch 1 und 2, dan dem alle Antriebs-, Aufhängungs- und Lenkungsteile (M, C; S, G; D) für die Vorderräder des Fahrzeugs und ihre Zubehörteile (R, B, E) vormontiert sind, wobei die oberen Befestigungsplatten (15) an den Aufhängungsteilen (S) von dren Montage an dem vorderen Karosseriemodul (1) montiert sind.

4. Kraftfahrzeug mit Vorderradantrieb, gekennzeichnet durch eine modulare vordere Untereinheit (16) nach Anspruch 3 und eine vormontierte hintere Einheit (H), die mit Hilfe der hinteren Befestigungsansätze (7, 12) und der oberen Befestigungsplatten (15) des vorderen Karosseriemoduls (1) der vorderen modularen Untereinheit (16) mechanisch miteinander verbunden sind.

5. Verfahren zum Zusammenbau eines Kraftfahrzeugs mit Vorderradantrieb, gekennzeichnet durch folgende Verfahrensschritte:

Vormontieren einer vorderen modularen Untereinheit (16) nach Anspruch 3,

Vormontieren einer mit zwei nach vorn ragenden oberen Befestigungsarmen (17) und unteren Befestigungsteilen (18) versehenen hinteren Untereinheit (H) und

mechanisches Verbinden der oberen Befestigungsplatten (15) und der hinteren Befestigungsansätze (7, 12) der vorderen modularen Untereinheit (16) mit den Befestigungsarmen (17) bzw. den unteren Befestigungsteilen (18) der hinteren Untereinheit (H).

**Revendications**

1. Module avant de carrosserie (1) faisant partie d'un châssis de véhicule à moteur, comprenant deux organes (3) formant des panneaux latéraux comprenant chacun une structure (10) de passage de roue avant, et une structure creuse intermédiaire (11) en forme de dôme, dont la cavité (11b) débouche vers l'extérieur, caractérisé en ce qu'il comprend:

un organe de base (2) ayant sensiblement une forme de cuvette qui a une partie avant (9) en forme de caisson, des bords latéraux en saillie (6) et des accessories (7) de fixation latérale arrière,

un accessoire (12) de fixation arrière de chaque organe (3) formant des panneaux latéraux, les structures avant et intermédiaire (10, 11) et les accessoires arrière (12) ayant des bords inférieurs (10a, 11a, 12a) qui cont couplés respectivement aux bords latéraux en saillie (6) et aux accessoires (7) de fixation latérale arrière de l'organe de base (2) afin que des structures latérales respectives (13) en forme de caisson raccordées à la partie de caisson avant (9) de l'organe de base (2) soient délimitées,

un organe (4) formant une traverse avant qui relie l'avant des structures (10) de passage de roue au-dessus de la partie de caisson avant (9) de l'organe de base (2), et

un organe (8) formant une traverse arrière qui relie les accessoires de fixation latérale arrière (7) de l'organe de base (2).

2. Module selon la revendication 1, caractérisé en ce qu'il comporte en outre deux plaques (15) de fixation supérieure destinées à être fixées sous forme de capuchons aux parties supérieures (11c) des structures en forme de dôme (11).

3. Sous-ensemble modulaire avant destiné à un véhicule à moteur, caractérisé en ce qu'il comprend un module avant de carrosserie (1) selon les revendications 1 et 2, sur lequel sont assemblés préablement tous les organes d'entraînement (M, C), de suspension (S, G) et de direction (D) des roues avant du véhicule ainsi que leurs accessoires (R, B, E), les plaques de fixation supérieure (15) étant montées sur les organes de suspension (S) avant leur assemblage sur le module avant de carrosserie (1).

4. Véhicule à moteur à traction avant, caractérisé en ce qu'il comprend un sous-ensemble modulaire avant (16) selon la revendication 3, et un sous-ensemblé arrière (H) assemblé préalablement, qui sont raccordés mécaniquement par les accessoires de fixation arrière (7, 12) et les plaques de fixation supérieure (15) du module avant (1) de carrosserie du sous-ensemble modulaire avant (16).

5. Procédé de montage d'un véhicule à moteur à traction avant, caractérisé en ce qu'il comprend les étapes suivantes:

l'assemblage préalable d'un sous-ensemble modulaire avant (16) selon la revendication 3,

l'assemblage préalable d'un sous-ensemble arrière (H) ayant deux supports (17) de fixation supérieure qui dépassent vers l'avant et des partie de fixation inférieure (18), et

la raccordement mécanique des plaques de fixation supérieure (15) et des accessoires de fixation arrière (7, 12) du sous-ensemble modulaire avant (16), et des supports de fixation (17) et des parties de fixation inférieure (18) du sous-ensemble arrière (H) respectivement.

FIG. 1

FIG. 3

FIG. 4

1

FIG. 2

FIG. 5

FIG. 6

FIG. 7

FIG. 8

EP 0 274 993 B1